Europäisches Patentamt

European Patent Office

Office européen des brevets

(19)

(11) **EP 1 509 641 B1**

(12) **EUROPÄISCHE PATENTSCHRIFT**

(45) Veröffentlichungstag und Bekanntmachung des Hinweises auf die Patenterteilung:
**14.09.2005 Patentblatt 2005/37**

(51) Int Cl.$^7$: **C25D 3/44**, C07F 5/06, C07F 1/00

(21) Anmeldenummer: **03735377.8**

(22) Anmeldetag: **13.05.2003**

(86) Internationale Anmeldenummer:
**PCT/EP2003/004972**

(87) Internationale Veröffentlichungsnummer:
**WO 2003/102276 (11.12.2003 Gazette 2003/50)**

(54) **VERFAHREN ZUR HERSTELLUNG VON ALUMINIUMORGANISCHEN KOMPLEXEN UND DEREN VERWENDUNG ZUR HERSTELLUNG VON ELEKTROLYTLÖSUNGEN ZUR ELEKTROCHEMISCHEN ABSCHEIDUNG VON ALUMINIUM-MAGNESIUM-LEGIERUNGEN**

METHOD FOR PRODUCING ORGANOALUMINIUM COMPLEXES AND THE USE THEREOF FOR PRODUCING ELECTROLYTE SOLUTIONS FOR THE ELECTROCHEMICAL DEPOSITION OF ALUMINIUM-MAGNESIUM ALLOYS

PROCEDE DE PRODUCTION DE COMPLEXES ORGANOALUMINIUM ET LEUR UTILISATION POUR PRODUIRE DES SOLUTIONS ELECTROLYTIQUES SERVANT A DEPOSER ELECTROCHIMIQUEMENT DES REVETEMENTS EN ALLIAGES ALUMINIUM-MAGNESIUM

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **31.05.2002 DE 10224089**

(43) Veröffentlichungstag der Anmeldung:
**02.03.2005 Patentblatt 2005/09**

(73) Patentinhaber: **Aluminal Oberflächtentechnik GmbH & Co. KG**
**56424 Staudt (DE)**

(72) Erfinder: **MEHLER, Klaus-Dieter**
**45470 Mülheim/Ruhr (DE)**

(74) Vertreter:
**Sternagel, Fleischer, Godemeyer & Partner Patentanwälte,**
**An den Gärten 7**
**51491 Overath (DE)**

(56) Entgegenhaltungen:
**EP-A- 0 084 816 WO-A-00/32847**
**DE-B- 1 056 377 US-A- 5 834 058**

**Beschreibung**

Die Erfindung betrifft ein verbessertes Verfahren zur Herstellung von aluminiumorganischen Komplexen, die zur Herstellung von Elektrolytlösungen für die elektrolytische Abscheidung von Aluminium-Magnesium-Legierungen eingesetzt werden.

Aluminiumorganische Komplexverbindungen werden seit längerer Zeit zur elektrolytischen Abscheidung von Aluminium verwendet (Dissertation H. Lehmkuhl, TH Aachen 1954, DE-PS 1047450; K. Ziegler, H. Lehmkuhl, Z. anorg. allg. Chemie 283 (1956) 414; DE-PS 1056377; H. Lehmkuhl, Chem. Ing. Tech. 36 (1964) 616; EP-A 0084816; H. Lehmkuhl, K. Mehler und U. Landau in Adv. in elektrochem. Science and Engineering (Ed. H. Gerischer, C. W. Tobias) Vol. 3, Weinheim 1994).

Das Interesse an elektrolytischen Beschichtungen von Metallwerkstücken mit Aluminium oder Aluminium-Magnesium hat wegen des hervorragenden Korrosionsschutzes dieser Schichten und deren ökologischer Unbedenklichkeit stark zugenommen. Deshalb hat die galvanische Beschichtung mit Hilfe von aluminiumorganischen Elektrolyten, die bei nur mäßig erhöhten Temperaturen zwischen 60° und 150 °C und in geschlossenen Systemen arbeiten, große technische Bedeutung.

In der PCT/EP-Anmeldung WO 00/32847 werden aluminiumorganische Elektrolyten beschrieben, die sich für die elektrochemische Abscheidung von Aluminium-Magnesium-Legierungen auch in technischen Anwendungen eignen. Diese Elektrolyte enthalten Alkalitetraalkylaluminium-Komponenten, insbesondere $K[AlEt_4]$, in einer bevorzugten Ausführungsform in einer Mischung mit $Na[AlEt_4]$, wobei das molare Verhältnis von Natrium- : Kalium-Komponente kleiner als 1:3 ist Diese Elektrolyte enthalten ferner Trialkylaluminium, bevorzugt $AlEt_3$, sowie Toluen oder ein flüssiges Xylen als bevorzugtes Lösungsmittel.

Stand der Technik

Die aus der Literatur bekannten Verfahren (Houben-Weyl, XIII/4 (1970), S. 110 - 120; L.I. Zakharkin u. V.V. Gavrilenko, ž. obšč Chim. 32, 689 (1962); engl.: 688; H. Lehmkuhl, K. Ziegler in Houben-Weyl, XIII/4 (1970), S. 120; E.B. Baker u. H.H. Sisler, Am Soc. 75, 5193 (1953)) zur Herstellung dieser aluminiumorganischen Komplexverbindungen sind schwierig und weisen entscheidende Nachteile auf. So müssen die Komplexe $MAlR_4$ (M = Na, K, Rb, Cs, R = Alkylreste mit vorzugsweise einem, zwei oder vier C-Atomen) aufwendig separat hergestellt und isoliert werden, bevor sie in weiteren Reaktionsschritten zu entsprechenden Mischungen unter Einsatz von Aluminiumalkylen $AlR_3$ und aromatischen Kohlenwasserstoffen umgesetzt werden, die dann nach Aufarbeitung die einsatzfähigen Elektrolytlösungen ergeben.

Die bekannten Herstellungsverfahren für diese Elektrolyte haben nicht nur den Nachteil mehrstufig zu sein, mit der Notwendigkeit der Isolierung der entsprechenden pyrophoren Zwischenstufen, sondern es treten auch Ausbeuteverluste auf. Abfallprodukte und Lösungsmittel, deren Handhabung aufgrund der Pyrophorizität aufwendig und kostenintensiv ist, müssen entsorgt werden.

So können bisher die in WO 00/32847 als besonders wirkungsvoll identifizierten Elektrolytlösungen (z. B. 0,8 mol $K[AlEt_4]$ / 0,2 mol $Na[AlEt_4]$ / 2,0 mol $AlEt_3$ / 3,3 mol Toluen) nur über die separate Herstellung von $Na[AlEt_4]$ und $K[AlEt_4]$, und deren Isolierung und Mischung zum richtigen Verhältnis K : Na mit anschließender Zugabe von Toluen und Trialkylaluminium hergestellt werden, mit all den oben angegebenen Nachteilen.

So wird in WO 00/32847 z. B. zunächst separat herzustellendes $NaAlR_4$ eingesetzt. Dieses $NaAlR_4$ kann dabei wie folgt hergestellt werden: Zusammengeben von Natriumhydrid und Aluminiumtriethyl zum Komplex $Na[HAlEt_3]$ in einem Lösungsmittel, das abgetrennt und entsorgt werden muss, wobei die Bildung des bei 64°C schmelzenden Natriumhydridkomplexes glatt in exothermer Reaktion erfolgt. Dann folgt die technisch aufwendige Umsetzung der pyrophoren Verbindung mit dem einzuleitenden Gas Ethen unter Druck zum $Na[AlEt_4]$-Komplex, wobei die Geschwindigkeit der Ethen-Anlagerung von vier Faktoren abhängig ist, der Rührung, der Temperatur, dem Druck und der Menge an NaH-Überschuß im Komplex. So ist bei 145° - 155°C die Reaktion nur sehr langsam, ab 180°C muß dagegen schon durch Kühlung des Reaktors die Additionsgeschwindigkeit gebremst werden, ab 190°C besteht durch Überhitzung die Gefahr einer durchgehenden Reaktion, die nur zu unreinen, braunen Produkten führt. Zusätzlich werden bei höheren Temperaturen durch Aufbaureaktion deutlich erhöhte Werte an Butylgruppen festgestellt. Insgesamt ist die Herstellung im Batchverfahren über diesen Weg nur sehr schwer steuerbar. Nach Isolierung von $Na[AlEt_4]$ als Feststoff, wobei erneut Lösungsmittel anfällt, erfolgt dann Umsetzung mit KCl unter partiellem Austausch von Na gegen K, wobei ein Gleichgewichtsverhältnis von Na : K von 1 : 4 entsteht und anfallendes NaCl abfiltriert und entsorgt werden muss, und anschließende Zugabe von Triethylaluminium und Toluen zum Einstellen der Endkonzentration des Elektrolyten.

Dieses Verfahren gestattet aufgrund der Gleichgewichtskonzentration lediglich Elektrolytlösungen mit einem Verhältnis von Na : K = ca. 0,2 : 0,8 herzustellen und ist somit nicht universell einsetzbar. Um andere Mischungsverhältnisse einzustellen, muss daher auch $K[AlEt_4]$ separat hergestellt (z. B. ähnlich dem für $Na[AlEt_4]$ angegebenen Verfahren unter Einsatz von Kaliumhydrid in einem hochsiedenden, aliphatischen Kohlenwasserstoff) und isoliert werden, bevor dann durch Abmischen von K[AlEt$_4$] und Na[AlEt$_4$] das einzustellende K:Na-Verhältnis erreicht wird und nach anschließender Zugabe von weiteren Komponenten die gebrauchsfähige Elektrolytlösung erhalten wird. Ein zusätzliches Problem bei dem voranstehenden Verfahrensweg besteht in der mangelnden industriellen Verfügbarkeit der Ausgangskomponente Natriumhydrid; da das System nach der Herstellung in einem galvanischen Beschichtungsprozeß eingesetzt wird, verbietet sich der Einsatz von industriellen Natriumhydrid-Suspensionen in Weißöl.

Deutlich einfacher erscheint die Herstellung von Alkalialuminiumtetraalkyl aus Alkanolat bei technisch verfügbarem Alkalialkanolat (DAS 1153754 (1958), K. Ziegler, Erf.: K. Ziegler u. H. Lehmkuhl; C. A. 60, 1794 (1964); H. Lehmkuhl, K. Ziegler in Houben Weyl, XIII/4 (1970), S. 116; H. Lehmkuhl u. R Schäfer, A. 705, 32 (1967); H. Lehmkuhl, Ang. Ch. 75,1090 (1963)).

$$M(OC_2H_5) + 2\,Al(C_2H_5)_3 \rightarrow M[(C_2H_5)_4Al] + (C_2H_5)_2Al(OC_2H_5)$$

M=K,Na

Es wird jedoch in der Literatur (H. Lehmkuhl, K. Ziegler in Houben Weyl, XIII/4 (1970), S. 116) auf einen unbedingt einzuhaltenden Verfahrensablauf hingewiesen, der eine industrielle Fertigung erheblich erschwert. Zitat:

"Bei Reaktionen zwischen Alkali-alkanolaten und Trialkyl-aluminium hat man darauf zu achten, daß niemals - auch nicht vorübergehend - in der Mischung das Alkalialkanolat im Überschuß vorliegt. Andernfalls wird der betreffende Versuchsansatz sofort braun. Die Erklärung liegt vermutlich darin, daß das Alkanolat entsprechend der oben gegebenen Reihenfolge der Komplexbildungstendenz die Alkylmetall-Verbindung in Freiheit setzt, deren weitere, noch ungeklärte Reaktionen die Braunfärbung bewirken. Man hat also stets eine wohlgerührte Suspension des trockenen Alkoholats in einem Kohlenwasserstoff in die Alkyl-aluminium-Verbindung einzutragen".

Aufgrund der Unlöslichkeit des Alkalialkanolats in Kohlenwasserstoffen bzw. aromatischen Kohlenwasserstoffen ist bei einer technischen Herstellung der Verfahrensschritt des kontinuierlichen Einbringens der unlöslichen Komponente als Suspension nur mit großem Aufwand realisierbar. Man hat deshalb in den bisherigen Versuchsansätzen diese mehr oder weniger stark auftretende Braunfärbung durch unerwünschte Reaktionsnebenprodukte (evtl. aus Reaktionen mit dem aromatischen Lösungsmittel) in Kauf genommen. Solchermaßen hergestellte Elektrolyte führen jedoch nur zu Systemen mit begrenzter Lebensdauer oder zu nicht verwertbaren Beschichtungen.

Es besteht also ein Bedarf nach einem Verfahren, für technische Anwendungen der vorbeschriebenen Elektrolyten größere Mengen von Alkalialuminiumtetraalkyl ohne verunreinigende Nebenprodukte kostengünstig herzustellen.

Überraschenderweise stellte sich heraus, dass entgegen der zitierten Literatur Alkalialuminiumtetraalkyl in der gewünschten Form auch durch kontinuierliche Zugabe des Trialkylaluminiums auf vorgelegtes Alkalialkanolat hergestellt werden kann, wenn man durch geeignete Maßnahmen (z. B. Kühlung) vermeidet, dass sich die Reaktionsmischung über 25 °C erwärmt.

Damit ist nunmehr ein Verfahren zur Herstellung von aluminiumorganischen Komplexverbindungen der allgemeinen Formel MAlR$_4$ verfügbar, wobei M = Li, Na, K, Rb, Cs, NR$_4$$^+$ und R ein Alkylrest mit maximal 4 C-Atomen ist, wobei

- ein Alkanolat der allgemeinen Formel M(OR) oder Mischungen von mehreren Alkanolaten, z. B. von zwei Alkanolaten M$^1$(OR) und M$^2$(OR) (M$^1$ ≠ M$^2$), in aromatischen Lösungsmitteln vorgelegt und
- mit mindestens einer Trialkylaluminiumverbindung der allgemeinen Formel AlR$_3$ umgesetzt wird, und
- die aluminiumorganischen Komplexverbindungen anschließend nach an sich bekannten Verfahren aus der Reaktionsmischung isoliert werden,
- dadurch gekennzeichnet, dass die Umsetzung bei Temperaturen von maximal 25 °C, vorzugsweise maximal 20 °C, erfolgt.

Dadurch sind völlig farblose Endprodukte erhältlich.

Nach diesem Verfahren hergestellte Verbindungen können zur Herstellung von Elektrolytlösungen gemäß WO 00/32847 für die elektrolytische Abscheidung von Aluminium-Magnesium-Legierungen auf elektrisch leitenden Werkstoffen unter Verwendung löslicher Aluminium- und Magnesium-Anoden oder Anoden aus Aluminium-Magnesium-Legierung eingesetzt werden..

Herstellung einer gebrauchsfertigen Elektrolytlösung:

1. Schritt: Die Edukte werden nach der folgenden allgemeinen Reaktionsgleichung

$$4 \, AlR_3 + M^1OR + M^2OR + \text{arom. KW} \rightarrow M^1AlR_4 + M^2AlR_4 + 2 \, R_2AlOR + \text{arom. KW}$$

in einem aromatischen Kohlenwasserstoff bei Temperaturen von -20 bis 25° C, vorzugsweise 0° bis 20° C, unter Inertgasatmosphäre umgesetzt. Danach erfolgt Abdestillation des aromatischen Kohlenwasserstoffs, der in Schritt 2.) wieder eingesetzt wird, und dann Destillation des $R_2AlOR$, das rein erhalten werden kann (und einen wichtigen Rohstoff darstellt - insbesondere im Falle von R = -Ethyl -, der kommerziell verwertbar ist, was weiter zur Wirtschaftlichkeit des Verfahrens und zur Vermeidung von Abfällen beiträgt). So erhält man die Mischung $M^1AlR_4$/ $M^2AlR_4$.

Es sind aber auch alternative Abtrennverfahren für das Gemisch $M^1AlR_4$/ $M^2AlR_4$ möglich. So kann z. B. durch Stehenlassen der Reaktionslösung bei Raumtemperaturbeschleunigt durch tiefere Temperaturen - das $M^1AlR_4$ / $M^2AlR_4$ ausgefällt und mittels Methoden wie Phasentrennung, Filtration oder Dekantieren rein erhalten und von dem Lösungsmittel und dem darin gelösten $R_2AlOR$ abgetrennt werden.

2. Schritt

Die erhaltene Mischung von $M^1AlR_4$ / $M^2AlR_4$ wird mit $AlR_3$ und aromatischem Kohlenwasserstoff z. B. Benzen, Toluen, Xylene, zur gebrauchsfertigen Elektrolytlösung gemischt:

Das Verfahren gestattet dabei die beliebige Wahl der molaren Verhältnisse von $M^1OR$ : $M^2OR$ im ersten Schritt und beliebige Zugabe von Mengen an $AlR_3$ und aromatischem Kohlenwasserstoff im zweiten Schritt, so dass das neue Verfahren jedes gewünschte Verhältnis von $AlR_3$ : ($M^1AlR_4$ + $M^2AlR_4$ ) : aromatischem Kohlenwasserstoff einzustellen erlaubt und daher generell zur Herstellung entsprechender Elektrolytlösungen anwendbar ist.

Bei optimaler Ausführung entstehen keinerlei Abfälle und die Handhabung von pyrophoren Einsatzstoffen und Zwischenverbindungen, die nicht isoliert werden müssen und in quantitativer Ausbeute anfallen, ist auf ein Mindestmaß reduziert, was wesentlich zur Sicherheit und Wirtschaftlichkeit des Verfahrens beiträgt. Weiterhin wird die Wirtschaftlichkeit durch die kommerzielle Verwendbarkeit des in Stufe 1.) bei Einsatz von $AlEt_3$ entstehenden $Et_2AlOEt$ erhöht, das einen weiter verwendbaren wichtigen Rohstoff darstellt

Beispiel:

Herstellung eines Elektrolyten zur Aluminium-Magnesium-Beschichtung:
Erwünschte Elektrolytzusammensetzung:

$$0{,}8 \, K[Al(C_2H_5)_4] + 0{,}2 \, Na[Al(C_2H_5)_4] + 1{,}0 \, Al(C_2H_5)_3 + 3{,}3 \, \text{Toluen}$$

**1.** Umsatz des Mischalkoholats mit $Al(C_2H_5)_3$ ("TEA")
**2.** Abtrennung der Nebenkomponente $Et_2AlOEt$
**3.** Einstellung der Endmischung mit TEA und Toluen
**4.** Überprüfung des Konditionier- bzw. Abscheidungsverhaltens
**5.** Begutachtung

**Zu 1.** Umsatz des Mischalkoholats [0,8 $KO(C_2H_5)$: 0,2 $NaO(C_2H_5)$] mit TEA

$$\text{Reaktion: } MO(C_2H_5) + 2 \, Al(C_2H_5)_3 \rightarrow M[Al(C_2H_5)_4] + (C_2H_5)OAl(C_2H_5)_2$$

Substanzherkunft:
TEA WITCOcrompton, Bergkamen; Toluen über $Na[Al(C_2H_5)_4]$ dest;
$MO(C_2H_5)$ aus eigener Herstellung.
Apparatur: 500ml-3-H-Kolben, KPG-Rührer, Dosiertrichter, Rückflußkühler mit indirekter Aliphatinkühlung, Argonüberleitung, Siliconölkühlbad.

| Ansatz: 29,9 g $MO(C_2H_5)$, (MG 80,88) | $\widehat{=}$ 294,8 mmol $KO(C_2H_5)$ |
|---|---|
| | $\widehat{=}$ 75,9 mmol $NaO(C_2H_5)$ |
| Σ | $\widehat{=}$ 370,7 mmol |

(fortgesetzt)

| 107 ml TEA = 88,8g<br>120ml Toluen | $\hat{=}$ 779,0 mmol |
|---|---|

Durchführung:

Das Alkoholat wurde in den Reaktionskolben eingewogen und mit 100 ml Toluen suspendiert. Das in ein Schlenkgefäß abgewogene TEA wurde in den Dosiertrichter gegeben und das Gefäß mit 20 ml Toluen nachgespült, das TEA innerhalb 4 h zur Alkoholat-Suspension unter Rühren zugetropft.

Bei Zutropfbeginn sofortige deutliche Reaktion an der Eintropfstelle. Deutliche Erwärmung. Die Temperatur wurde durch ein Ölkühlbad auf max. 25°C gehalten. Nach Zugabe von ca. 10% der TEA-Menge färbt sich die Suspension erst an der Eintropfstelle gelblich, später wird die gesamte Suspension gelb und anschließend allmählich tieforange.

Nach insgesamter Zugabe von ca. 50% der TEA-Menge tritt schlagartig Entfärbung auf. Die nun wieder weiße Suspension wird während des weiteren Zutropfens klar. Nach beendigter TEA-Zugabe liegt eine klare, farblose Lösung vor. Auswaage: 208,1g

**Zu 2.** Abtrennung der Nebenkomponente $Et_2AlOEt$.

Die erhaltene Reaktionslösung wurde in einen 500ml 2-H-Kolben umgefüllt und anschließend im Vakuum (0,1mm) bis zu einer Badtemperatur von 40°C das Toluen abkondensiert.

91,9g Toluenkondensat, 116,2g flüssiger Rückstand (Theorie: 118,7g).

Nach Abkühlen auf Raumtemperatur liegen zwei flüssige Phasen vor. Die obere Phase (geringere Menge) ist $Et_2AlOEt$.

Über Nacht war die untere Phase größtenteils auskristallisiert. Hier besteht die Möglichkeit einer einfachen Phasentrennung. Im vorliegenden Fall wurde der Weg der destillativen Trennung gewählt.

Im Hochvakuum ($< 1 \cdot 10^{-3}$mm) bis max. 100°C Badtemperatur alles Flüchtige abdestilliert:

45,2g Destillat = 347,7mmol $Et_2AlOEt$ d. s. 93,8% d.Theorie

68,1gfl. Rückstand = 381 mmol $M[Al(Et)_4]$

$M[Al(Et)_4]_{(0,8K/0,2Na)}$ MG=178,8

Theorie: 66,1g.

Der Rückstand ist auch nach mehreren Stunden bei 22°C noch flüssig.

**Zu 3.** Einstellung der Endmischung mit TEA und Toluen.

Zugabe von Toluen und TEA.

Substanzherkunft: TEA und Toluen wie zuvor beschrieben.

Apparatur: 500 ml-2-H-Kolben, Dosiertrichter, Rührung mittels 3 cm-Magnet im Glasmantel, Schutztopf, Argonüberleitung.

Ansatz: 130 ml Toluen = 112,3 g = 1221,0 mmol, 51 ml TEA = 42,3 g = 371,3 mmol Durchführung: Zum Destillationsrückstand wurden unter Rühren bei 22°C 110 ml Toluen gegeben, dann wurde über den Dosiertrichter erst das TEA und anschließend das restliche Toluen (Spülen des DT) ebenfalls unter Rühren zugetropft.

Man erhält eine klare, farblose Lösung. 213,8 g Elektrolyt $\kappa_{95\,°C}$ = 15,6 mS/cm

**Zu 4.** Überprüfung des Konditionier- und Abscheidungsverhaltens.

Zur Überprüfung der Verwendung als Elektrolyt zur Al/Mg-Beschichtung wurde nach Standard-Verfahren Konditionierung und Abscheidung überprüft. Dazu wurde in mehreren Stufen das Abscheideverhalten überprüft:

Anodenmaterial: Legierungselektroden AlMg25, 55 x 10 x 5mm

Kathode: Sechskantschraube 8.8 M8 x 25

Kathodenvorbehandlung: Entfettung, Entzunderung, Ultraschall, $H_2O$-Wäsche,

Vakuumtrocknung, Aufbewahrung unter Argon

Eintauchtiefe Kathode: komplett

Abstand zur Anode: 10 mm, wirksame Kathodenfläche: ca. 10 $cm^2$

Kathodenbewegung: 60 U/min

Badbewegung: 2 cm Magnet im Glasmantel, 250 U/min

Temperatur: 95 - 98°C

Stromdichte:

- 01 1. Konditionierungsphase 0,05 bis 1,0 A/dm$^2$ ($\hat{=}$ 220mAh)
- 02 2. Konditionierungsphase 1,0 A/dm$^2$ bis 2,0A/dm$^2$ ($\hat{=}$ 140mAh)
- 03 3. Konditionierungsphase 2,0 A/dm$^2$ ($\hat{=}$ 157mAh)
- 04 4. Abscheidung 2,0 A/dm$^2$ ($\hat{=}$ 160mAh)
- 05 5. Abscheidung 5,0 A/dm$^2$ ($\hat{=}$ 100mAh)

Schichtdicke: s. Beschreibung, Stromausbeute: nicht bestimmt, Schichtauswaage: s. Beschreibung

Abscheidungen:

|  | Auswaage [mg] | Schichtdicke ber. [μm] | Bemerkungen |
|---|---|---|---|
| -01 | 64,7 | 27 | gleichmäßig, hell, matt, geringe Streuung |
| -02 | 42,1 | 17 | gleichm., seidenglanz, Streuung besser |
| -03 | 49,0 | 20 | teilw. matt, seidengl., Streuung verbessert |
| -04 | 41,2 | 16 | sehr gut, glänzend, norm. Streuung |
| -05 | 31,0 | 12 | Schicht gut, etwas matter als -04 |

In der 1. Konditionierungsphase ist die Schicht hell, matt und wird nur mit geringer Streuung abgeschieden. Die Stromdichtebelastung sollte hier 1,0 A/dm$^2$ nicht überschreiten.

Im Verlauf erhöht sich die Magnesium-Konzentration im Elektrolyten und es verbessert sich das Abscheideverhalten, die Streuung nimmt deutlich zu, die Schichten werden silbriger und die Stromdichtebelastbarkeit steigt erheblich an. Eine kathodische Stromdichte von 2,0 bis 3,0 A/dm$^2$ ist empfehlenswert. Die maximale Belastung wurde mit 5A/dm$^2$ durchgeführt, liegt jedoch hinsichtlich der Grenzstromdichte sicherlich noch deutlich oberhalb dieses Wertes.

**Patentansprüche**

1.  Verfahren zur Herstellung von aluminiumorganischen Komplexverbindungen der allgemeinen Formel MAIR$_4$ und Mischungen solcher Verbindungen, wobei M= Li, Na, K, Rb, Cs, NR$_4^+$ und R= CH$_3$-, C$_2$H$_5$-, n- und/oder iso- C$_3$H$_7$-, n- und/oder iso-C$_4$H$_9$ bedeuten, wobei

    -   ein Alkanolat der allgemeinen Formel M(OR) oder Mischungen von mehreren Alkanolaten in aromatischen Lösungsmitteln vorgelegt und
    -   mit mindestens einer Trialkylaluminiumverbindung der allgemeinen Formel AIR$_3$ umgesetzt wird, und
    -   die aluminiumorganischen Komplexverbindungen anschließend aus der Reaktionsmischung isoliert werden,
    -   **dadurch gekennzeichnet, dass** die Umsetzung bei Temperaturen von maximal 25°C erfolgt.

2.  Verfahren nach Anspruch 1, wobei die Umsetzung bei Temperaturen von maximal 20°C erfolgt.

3.  Verfahren nach Ansprüchen 1-2, wobei eine Mischung aus M$^1$AIR$_4$ und M$^2$AIR$_4$ hergestellt wird, wobei M$^1$ und M$^2$ die Bedeutung von M haben und M$^1 \neq$ M$^2$ und das molare Verhältnis der beiden Alkanolate zwischen 0,1 und 10 beträgt.

4.  Verfahren nach Anspruch 3, wobei M$^1$ = K und M$^2$ = Na ist und das molare Verhältnis von M$^1$:M$^2$ = 4 : 1 beträgt.

5.  Verfahren nach Ansprüchen 1 bis 4, **dadurch gekennzeichnet, dass** R in allen Edukten ein Ethylrest ist.

6.  Verfahren nach den Ansprüchen 3 bis 5, **dadurch gekennzeichnet, dass** das Gemisch M$^1$AIR$_4$/ M$^2$AIR$_4$ mit aromatischem Kohlenwasserstoff und AIR$_3$ versetzt wird.

**Claims**

1. A method for the production of organoaluminum complex compounds of general formula $MAIR_4$ and mixtures of such compounds, wherein M represents Li, Na, K, Rb, Cs, $NR_4^+$, and R represents $CH_3$, $C_2H_5$, n- and/or iso-$C_3H_7$, n- and/or iso-$C_4H_9$, in which method

   • an alkanolate of general formula M(OR) or mixtures of several alkanolates in aromatic solvents are supplied and
   • reacted with at least one trialkylaluminum compound of general formula $AIR_3$, and
   • the organoaluminum complex compounds are subsequently isolated from the reaction mixture,
   • **characterized in that** the reaction is performed at temperatures of 25°C at maximum.

2. The method according to claim 1, wherein the reaction is performed at temperatures of 20°C at maximum.

3. The method according to claims 1-2, in which method a mixture of $M^1AIR_4$ and $M^2AIR_4$ is produced, wherein $M^1$ and $M^2$ have the meaning of M and $M^1 \neq M^2$, and the molar ratio of the above two alkanolates is between 0.1 and 10.

4. The method according to claim 3, in which method $M^1$ = K and $M^2$ = Na, and the molar ratio of $M^1/M^2$ is 4:1.

5. The method according to claims 1 to 4, **characterized in that** R in all educts is an ethyl residue.

6. The method according to claims 3 to 5, **characterized in that** the mixture $M^1AIR_4/ M^2AIR_4$ is added with aromatic hydrocarbon and $AIR_3$.

**Revendications**

1. Procédé de production de composés complexes d'organo-aluminium de formule générale $MAIR_4$ et de mélanges de tels composés, dans lesquels M = Li, Na, K, Rb, Cs, $NR_4^+$ et R = $CH_3^-$, $C_2H_5^-$, n- et/ou iso-$C_3H_7^-$, n- et/ou iso-$C_4H_9$, dans lequel

   - on dispose un alcanolate de formule générale M(OR) ou des mélanges de plusieurs alcanolates dans des solvants aromatiques et
   - on les fait réagir avec au moins un composé de trialkylaluminium de formule générale $AIR_3$, et
   - on isole ensuite du mélange réactionnel le composé complexe d'organo-aluminium,

   **caractérisé en ce qu'**
   on conduit la réaction à des températures de 25°C au maximum.

2. Procédé selon la revendication 1, dans lequel la réaction se déroule à des températures de 20°C au maximum.

3. Procédé selon les revendications 1 et 2, dans lequel on produit un mélange de $M^1AIR_4$ et $M^2AIR_4$ dans lequel $M^1$ et $M^2$ ont la signification de M et $M^1 \neq M^2$, et le rapport molaire des deux alcanolates est compris entre 0,1 et 10.

4. Procédé selon la revendication 3, dans lequel $M^1$ = K et $M^2$ = Na, et le rapport molaire de $M^1 : M^2$ est de 4 : 1.

5. Procédé selon les revendications 1 à 4,
   **caractérisé en ce que**
   R dans tous les réactifs limitants est un radical éthyle.

6. Procédé selon les revendications 3 à 5,
   **caractérisé en ce que**
   le mélange $M^1AIR_4/M^2AIR_4$ est coupé avec un hydrocarbure aromatique et $AIR_3$.